# EUROPÄISCHE PATENTSCHRIFT

(11) **EP 1 780 456 B1**
(45) Veröffentlichungstag und Bekanntmachung des Hinweises auf die Patenterteilung: **21.09.2011**
(21) Anmeldenummer: 06122452.3
(22) Anmeldetag: 17.10.2006
(51) Int. Cl.: H02G 3/12, F16L 5/00

(54) **Eingiessteil zum Durchführen von Leitungen**
Part to be moulded in a wall, for feeding conduits through
Dispositif pour être moulé dans un mur, pour le passage de conduits

(30) Priorität: 27.10.2005 DE 102005000146
(43) Veröffentlichungstag der Anmeldung: 02.05.2007
(73) Patentinhaber: HILTI Aktiengesellschaft, 9494 Schaan (LI)
(72) Erfinder: Fischer, Marco, 86161, Augsburg (DE); Monden, Thomas, 87778, Stetten (DE)
(74) Vertreter: Wildi, Roland

(56) Entgegenhaltungen:
- WO-A-81/02816
- DE-U- 6 917 145
- DE-U1- 8 615 929
- GB-A- 2 171 139
- US-A1- 2003 172 603

## Beschreibung

### Technisches Gebiet

Die Erfindung betrifft ein Eingiessteil zum Durchführen von Leitungen, der im Oberbegriff des Patentanspruchs 1 genannten Art.

### Stand der Technik

Bei der Planung und Konstruktion von Gebäuden werden vielfach in Wänden und Decken Durchführungen für Leitungen, wie Rohre, Kabel und dergleichen, ausgespart, durch die erst in einer späteren Bauphase beziehungsweise in einem Erweiterungsprojekt die Leitungen hindurchgeführt werden. Auf diese Weise wird verhindert, dass die Rohre, Kabel oder dergleichen in frühen Bauphasen Beschädigungen erleiden. Um beispielsweise eine Durchführung in einer Decke zu erstellen, wird bereits während der Schalungsarbeiten eine rohrförmige Vorrichtung des gewünschten Innendurchmessers als Platzhalter auf der Schalung befestigt und danach in das gegossene Bauteil, wie eine Betondecke oder Betonwand miteingegossen. Der Platzhalter verbleibt in dem gegossenen Bauteil und überragt das gegossene Bauteil üblicherweise wenigstens auf einer Seite. Die ausgesparten Durchführungen stellen beispielsweise in einem Brandfall eine Gefahr hinsichtlich der Ausbreitung eines Feuers dar. Es müssen daher Vorkehrungen getroffen werden, die gewährleisten, dass die Ausbreitung eines Feuers durch eine derartige Durchführung für eine vorgegebene Mindestzeit verhindert wird. Zu diesem Zweck umfassen die rohrförmigen Vorrichtungen in einem, eine Durchführöffnung umgebenden Raum z. B. eine feuerhemmende Masse, die im Brandfall intumesziert und bei der Expansion die Durchführung verschliesst. Bei einem durchgeführten, brennbaren Kunststoffrohr, verhindert die intumeszierende Masse eine Ausbreitung des Feuers durch das Rohr, indem es dieses bei der Expansion zusammenquetscht und die Durchführung abschottet. Solche Eingiessteile bestehen üblicherweise aus einem einteiligen Gehäuse, beispielsweise aus Kunststoff, welches z. B. mit einer Säge auf die zu erstellende Bauteildicke abgelängt wird.

Nachteilig an der bekannten Lösung ist, dass bei grösseren Bauteildicken die Länge, der üblicherweise gefertigten Eingiessteile überschritten wird. Der Anwender überbrückt solche Differenzen beispielsweise mit Hilfskonstruktionen, die jedoch oftmals beim Giessen des Bauteils instabil werden oder mit einem erheblichen Aufwand zu befestigen sind. Aus wirtschaftlichen Gründen ist die Herstellung eines Eingiessteils, das zumindest den grössten Anteil von Bauteildicken abdecken würde, nicht sinnvoll, da in einem beachtlichen Teil der Anwendungsfälle ein grosser Abschnitt des Eingiessteils abgelängt werden muss. Zudem lässt sich bei diesen Eingiessteilen ein Deckelteil zum Abdecken der Durchführöffnung während dem Giessen des Bauteils nur über Formschluss an dem freien Ende des Eingiessteils festlegen. Das Deckelteil muss durch zusätzliche Massnahmen an dem Eingiessteil gesichert werden.

Aus der US 2004/0016190 A1 ist ein Eingiessteil zum Durchführen von Leitungen bekannt, das ein Hüllrohr und ein, mit dem Hüllrohr verbindbares Basisteil aufweist. Das Basisteil weist einen, eine Durchführöffnung umgebenden Aufnahmeraum für ein Abschottmittel auf. Das Abschottmittel ist eine intumeszierende Masse, die im Brandfall expandiert und die Durchführöffnung verschliesst. Das Hüllrohr ist aus einer Vielzahl von querverlaufenden Bändern gebildet, die miteinander über eine lösbare Verbindung verbunden und mittels eines Greifabschnitts ergreifbar sind. Über Schnappverbindungen ist ein Deckelteil oder ein Kupplungsteil am freien Ende des Hüllrohrs festlegbar.

Nachteilig an der bekannten Lösung ist, dass das Hüllrohr nur stufenweise ablängbar ist. Des Weiteren ist die Herstellung eines solchen Eingiessteils aufwändig, was insbesondere bei einem Massenartikel, wie es ein solches Eingiessteil darstellt, einen erheblichen Nachteil darstellt.

### Darstellung der Erfindung

Aufgabe der Erfindung ist es, ein Eingiessteil zum Durchführen von Leitungen zu schaffen, das stufenlos ablängbar und modular in der Anwendung ist.

Die Aufgabe ist durch die Merkmale des unabhängigen Anspruchs gelöst. Vorteilhafte Weiterbildungen sind in den Unteransprüchen dargelegt.

Gemäss der Erfindung umfasst ein Eingiessteil zum Durchführen von Leitungen ein Hüllrohr und ein, mit dem Hüllrohr verbindbares Basisteil, das einen, eine Durchführöffnung umgebenden Aufnahmeraum für ein Abschottmittel aufweist. Das Hüllrohr weist eine gewindeähnliche Aussenkontur und das Basisteil im Bereich der Durchführöffnung eine, der gewindeähnlichen Aussenkontur entsprechende gewindeähnliche Innenkontur auf.

Das erfindungsgemässe Eingiessteil ist modular ausgestaltet. Für eine Brandabschottung wird als Abschottmittel beispielsweise eine intumeszierende Masse im Aufnahmeraum des Basisteils angeordnet. Für eine Abschottung gegen Flüssigkeiten kann eine bei Kontakt mit der Flüssigkeit quellbare Masse als Abschottmittel im Aufnahmeraum vorgesehen sein.

Das Hüllrohr ist auf die gewünschte Länge stufenlos ablängbar und wird über die gewindeähnliche Verbindung sicher mit dem Basisteil verbunden, wobei die gewindeähnliche Verbindung einen festen Anknüpfungspunkt schafft. Das Hüllrohr wird beispielsweise als langes Rohr, das über seine gesamte Längserstreckung eine gewindeähnliche Aussenkontur aufweist, dem Anwender zur Verfügung gestellt, von dem dieser die benötigte Länge für das Hüllrohr des Eingiessteils ablängt. Die gewindeähnliche Aussenkontur des Hüllrohres und/oder die gewindeähnliche Innenkontur des Basisteils ist vorteilhafterweise derart ausgestaltet, dass das Basisteil ohne eine Bearbeitung der Schnittkante des Hüllrohres mit diesem mittels einer Schraubbewegung verbindbar ist.

Die gewindeähnliche Ausgestaltung der Aussenkontur des Hüllrohres und/oder die gewindeähnliche Ausgestaltung der Innenkontur des Basisteils kann eine Gewindegeometrie oder eine stufenlos einstellbare Geometrie in unterschiedlichen Ausführungen hinsichtlich der Ganghöhe, Gewindetiefe beziehungsweise Geometrietiefe oder Mehrgängigkeit sein. In einer vorteilhaften Ausführungsform weist die gewindeähnliche Innenkontur nur sequenziell Gewindegangabschnitte auf.

Die gewindeähnliche Aussenkontur des Hüllrohres schafft zudem eine Anbindung an das gegossene Bauteil, so dass entlang des Hüllrohres keine durchgehenden Haarrisse oder Kapillare auftreten, die zu einer Undichtigkeit führen würden.

Vorzugsweise ist die gewindeähnliche Aussenkontur des Hüllrohres mit einem Deckelteil verbindbar, wobei der Deckelteil vorteilhafterweise zumindest bereichsweise eine, der gewindeähnlichen Aussenkontur entsprechende gewindeähnliche Innenkontur aufweist. Der Deckelteil ist mittels einer Schraubbewegung sicher mit dem Hüllrohr verbunden. Der Deckelteil ist kraftschlüssig an dem Hüllrohr gehalten und muss nicht durch zusätzliche Massnahmen an diesem gesichert werden.

In einer vorteilhaften Ausführungsform ist die gewindeähnliche Aussenkontur des Hüllrohres mit an dem Deckelteil ausgebildeten Vorsprüngen verbindbar, wobei die Vorsprünge an der Seite, die mit der Aussenkontur des Hüllrohres in Anlage kommt, mit einer, der gewindeähnlichen Aussenkontur entsprechende gewindeähnliche Innenkontur versehen sind. Das Deckelteil ist vorteilhaft zusätzlich über einen Formschluss an dem freien Ende des Hüllrohres fixiert. Vorteilhaft ist ein solches Deckelteil zusätzlich mit Dichtlippen versehen, die im festgelegten Zustand des Deckelteils beispielsweise mit der Innenwandung des Hüllrohres in Anlage kommen.

Bevorzugt ist die gewindeähnliche Aussenkontur des Hüllrohres mit einem zweiten Basisteil verbindbar, das einen, eine Durchführöffnung umgebenden Aufnahmeraum für ein Abschottmittel und im Bereich der Durchführöffnung eine, der gewindeähnlichen Aussenkontur entsprechende gewindeähnliche Innenkontur aufweist. Das Basisteil weist als Abschottmittel beispielsweise eine intumeszierende Masse oder eine mit der Flüssigkeit quellbare Masse als Abschottmittel im Aufnahmeraum auf.

Ein solches Eingiessteil weist z. B. an beiden Enden des Hüllrohres jeweils ein Basisteil für eine Brandabschottung der Durchführung auf. Ein solches Eingiessteil wird beispielsweise bei einer Wanddurchführung eingesetzt, bei der auf beiden Seiten der Wand ein Brandfall auftreten kann. In einer Variante dazu weist das Eingiessteil an beiden Enden jeweils ein Basisteil für eine Flüssigkeitsabschottung der Durchführung auf. Weiter kann an dem Hüllrohr an einem Ende ein Basisteil für eine Brandabschottung der Durchführung und am anderen Ende des Hüllrohres ein Basisteil für eine Flüssigkeitsabschottung der Durchführung vorgesehen sein.

Vorzugsweise ist die gewindeähnliche Aussenkontur des Hüllrohres mit einem hülsenförmigen Kupplungsteil verbindbar. Wurde ein Hüllrohr versehentlich zu kurz abgelängt oder wird ein Reststück verwendet, schafft das, an dem freien Ende des mit dem Basisteil verbundenen Hüllrohres angeordnete Kupplungsteil einen Anknüpfungspunkt für ein weiteres Hüllrohr.

In einer vorteilhaften Ausführungsform ist die gewindeähnliche Aussenkontur des Hüllrohres mit einer, der gewindeähnlichen Aussenkontur entsprechenden gewindeähnlichen Innenkontur des hülsenförmigen Kupplungsteils verbindbar. Damit wird eine sichere Verbindung zwischen dem beziehungsweise den Hüllrohren geschaffen, die einfach zu montieren ist und auch beim Giessen des Bauteils stabil bleibt. Zudem ist eine solche Verbindung flüssigkeitsdicht, was ein Eindringen von Teilen der Giessmasse für das Bauteil in die Durchführöffnung des Eingiessteils verhindert.

Das Hüllrohr, das Basisteil, das Deckelteil und das Kupplungsteil des erfindungsgemässen Eingiessteils sind vorteilhaft aus einem Kunststoff gefertigt. Alternativ sind einzelne oder alle Teile des Eingiessteils aus Metall gefertigt, welche gegebenenfalls mit Teilen des Eingiessteils aus Kunststoff verbindbar sind.

Das erfindungsgemässe Eingiessteil zeichnet sich durch seine einfache Handhabung und dessen Modularität aus. Die einzelnen Teile des Eingiessteils sind in verschiedenen Variationen miteinander verbindbar, so dass weitgehend alle möglichen Arten von Durchführungen durch Bauteile mit diesem Eingiessteil ohne grossen Aufwand und wirtschaftlich erstellt werden können.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die Erfindung wird nachstehend anhand mehrerer Ausführungsbeispiele näher erläutert. Es zeigen:
- Fig. 1: einen Schnitt in der Ebene I - I der Fig. 2 durch ein erstes Ausführungsbeispiel des erfindungsgemässen Eingiessteil;
- Fig. 2: das Eingiessteil gemäss Figur 1 in einer Perspektiv-Explosionsdarstellung;
- Fig. 3: einen Schnitt durch ein zweites Ausführungsbeispiel des erfindungsgemässen Ein-giessteils; und
- Fig. 4: ein drittes Ausführungsbeispiel des erfindungsgemässen Eingiessteils in einer Per-spektiv-Explosionsdarstellung.

Grundsätzlich sind in den Figuren gleiche Teile mit den gleichen Bezugszeichen versehen.

### Wege zur Ausführung der Erfindung

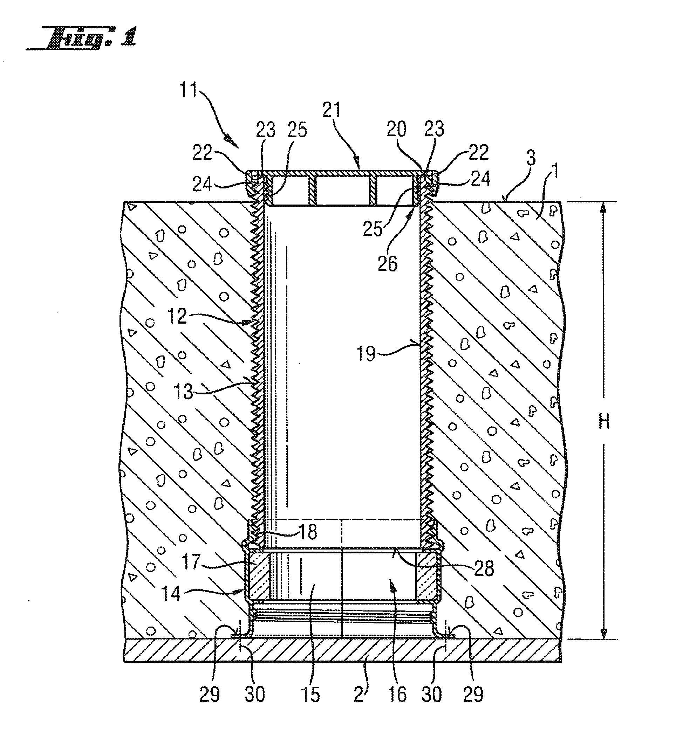

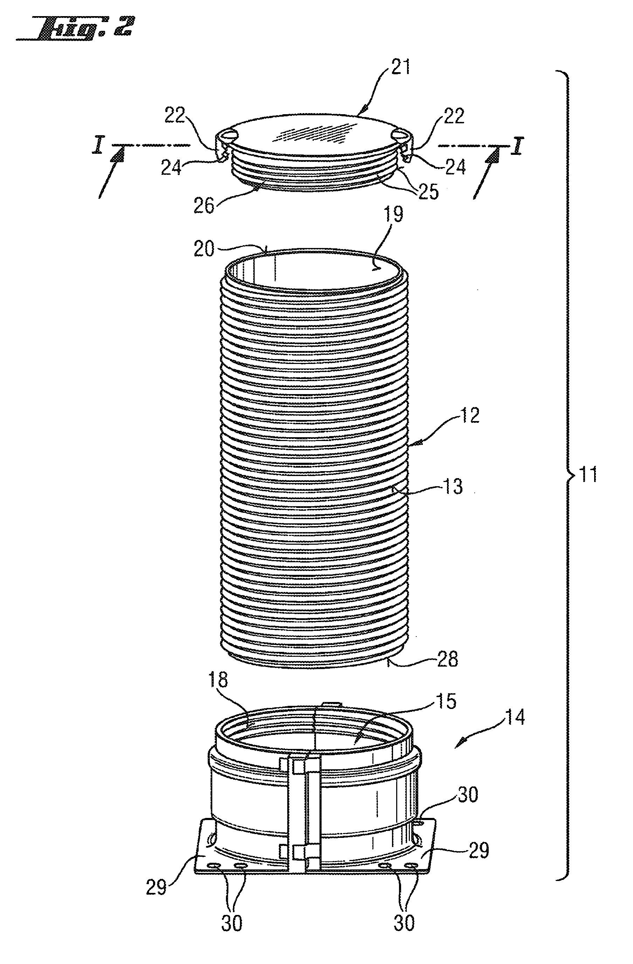

Das in den Figuren 1 und 2 dargestellte Eingiessteil 11 umfasst ein Hüllrohr 12 mit einer gewindeähnlichen Aussenkontur 13, die als durchgehendes Gewinde ausgebildet ist und sich über die gesamte Längserstreckung des Hüllrohres 12 erstreckt. Weiter umfasst das Eingiessteil 11 ein Basisteil 14, das einen, eine Durchführöffnung 15 umgebenden Aufnahmeraum 16 für ein Abschottmittel 17 aufweist. Eine, der gewindeähnlichen Aussenkontur 13 entsprechende Innenkontur 18 ist im Bereich der Durchführöffnung 15, anschliessend an den Aufnahmeraum 16 an dem Basisteil 14 ausgebildet. Zudem ist ein Deckelteil 21 vorgesehen, das mit der gewindeähnlichen Aussenkontur 13 über an dem Deckelteil 21 ausgebildete Vorsprünge 22 verbindbar ist. An der Seite 23 der Vorsprünge 22, die mit der gewindeähnlichen Aussenkontur 13 des Hüllrohres in Anlage kommt, sind jeweils als Gewindeabschnitte 24 ausgebildete gewindeähnliche Innenkonturen vorgesehen, die entsprechend der gewindeähnlichen Aussenkontur 13 ausgebildet sind.

Das Deckelteil 21 weist einen von diesem abragenden, umlaufenden Einführabschnitt 26 auf, der an seinem äusseren Umfang mit Dichtlippen 25 versehen ist, die im zusammengesetzten Zustand des Eingiessteils 11 mit der Innenwandung 19 des Hüllrohres 12 in Anlage kommen, so dass das freie Ende 20 des Hüllrohres 12 sicher abdichtet ist.

Anhand der Figur 1 wird nachfolgend die Anwendung des Eingiessteils 11 dargelegt. In einem ersten Schritt wird das Hüllrohr 12 gemäss der gewünschten Höhe H des Bauteils 1 abgelängt und anschliessend mittels einer Schraubbewegung mit dem Basisteil 14 verbunden. Die Länge des Hüllrohres 12 wird derart gewählt, dass dieses im eingegossenen Zustand etwas über die Oberfläche 3 des gegossenen Bauteils 1 vorsteht. Die gewindeähnlichen Aussenkontur 13 des Hüllrohres 12 und die, der gewindeähnlichen Aussenkontur 13 entsprechende Innenkontur 18 des Basisteils 14 sind derart ausgebildet, dass diese ohne eine weitere Bearbeitung der Schnittkante 28 miteinander verbindbar sind.

Das Basisteil 14 weist Flanschabschnitte 29 mit mehreren Nagellöchern 30 auf. Das zusammengesetzte Eingiessteil 11 wird an der gewünschten Stelle auf der Schalung 2 positioniert und beispielsweise mit durch die Nagellöcher 30 hindurchgeführte Nägel an der Schalung 2 fixiert. Anschliessend wird das Deckelteil 21 mittels einer Schraubbewegung am freien Ende 20 des Hüllrohres 12 angeordnet. Anschliessend wird das Bauteil 1 gegossen, wobei durch die gewindeähnliche Aussenkontur 13 des Hüllrohres 12 eine formschlüssige Anbindung zwischen dem Eingiessteil 11 und dem Bauteil 1 geschaffen wird, die eine Bildung von Haarrissen und Kapillaren in diesem Bereich verhindert.

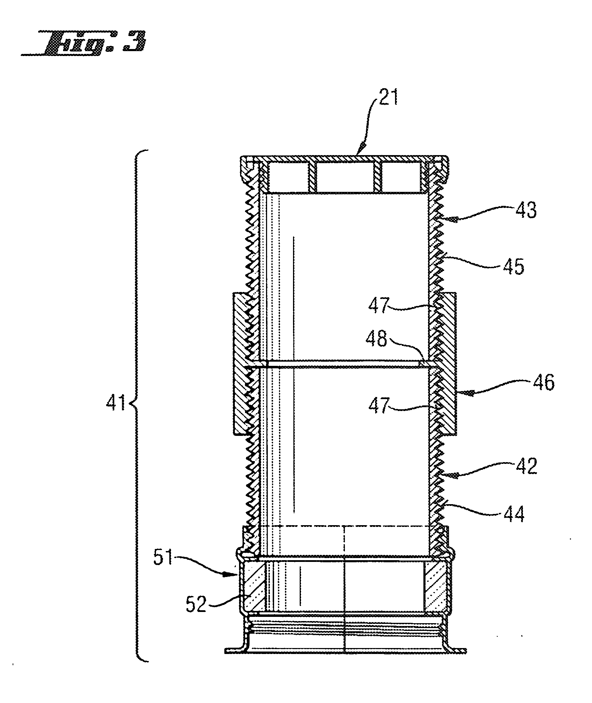

Das Eingiessteil 41 gemäss Figur 3 umfasst ein erstes Hüllrohr 42 und ein zweites Hüllrohr 43, die jeweils eine gewindeähnliche Aussenkontur 44 bzw. 45 aufweisen. Die Hüllrohre 42 und 43 sind über ein hülsenförmiges Kupplungsteil 46 miteinander verbunden, wobei das hülsenförmige Kupplungsteil 46 eine, der gewindeähnlichen Aussenkontur 44 bzw. 45 entsprechende Innenkontur 47 aufweist. Weiter weist das hülsenförmige Kupplungsteil 46 einen umlaufenden, innenliegenden Vorsprung 48 als Anschlag für die mit dem hülsenförmigen Kupplungsteil 46 zusammengeführten Hüllrohre 42 und 43 auf. Das Eingiessteil 41 umfasst weiter ein Deckelteil 21 sowie ein Basisteil 51, das als Abschottmittel 52 eine bei Kontakt mit einer Flüssigkeit quellbare Masse zur Schaffung einer Abschottung gegen Flüssigkeiten auf.

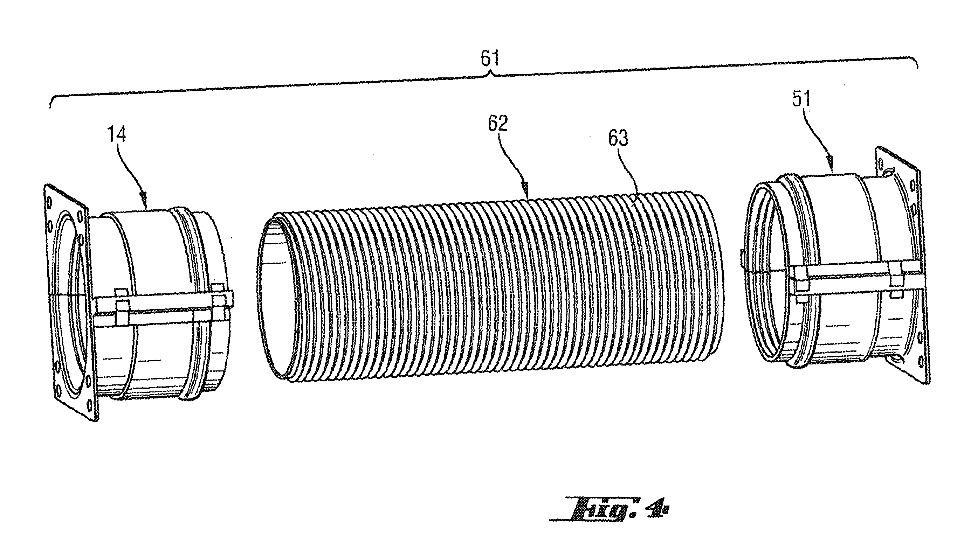

Das in der Figur 4 dargestellte Eingiessteil 61 umfasst ein Hüllrohr 62 mit einer gewindeähnlichen Aussenkontur 63 aufweisen sowie ein Basisteil 14 mit einer intumeszierenden Masse als Abschottmittel und ein Basisteil 51 mit einer bei Kontakt mit einer Flüssigkeit quellbaren Masse. Anstelle des Basisteils 51 können auch zwei Basisteile 14 mit einer intumeszierenden Masse als Abschottmittel an dem Hüllrohr 62 vorgesehen sein. Vice versa können anstelle des Basisteils 14 auch zwei Basisteile 51 mit einer bei Kontakt mit einer Flüssigkeit quellbaren als Abschottmittel an dem Hüllrohr 62 vorgesehen sein.

## Patentansprüche

1. Eingiessteil zum Durchführen von Leitungen mit einem Hüllrohr (12; 42, 43; 62) und mit einem, mit dem Hüllrohr (12; 42, 43; 62) verbindbaren Basisteil (14; 51), das einen, eine Durchführöffnung (15) umgebenden Aufnahmeraum (16) für ein Abschottmittel (17; 52) aufweist, **dadurch gekennzeichnet, dass** das Hüllrohr (12; 42, 43; 62) eine gewindeähnliche Aussenkontur (13; 44, 45; 63) und das Basisteil (14; 51) im Bereich der Durchführöffnung (15) eine, der gewindeähnlichen Aussenkontur (13; 44, 45; 63) entsprechende gewindeähnliche Innenkontur (18) aufweist.

2. Eingiessteil nach Anspruch 1, **dadurch gekennzeichnet, dass** die gewindeähnliche Aussenkontur (13; 45) des Hüllrohres (12; 43) mit einem Deckelteil (21) verbindbar ist.

3. Eingiessteil nach Anspruch 2, **dadurch gekennzeichnet, dass** die gewindeähnliche Aussenkontur (13; 45) des Hüllrohres (12; 43) mit an dem Deckelteil (21) ausgebildeten Vorsprüngen (22) verbindbar ist.

4. Eingiessteil nach Anspruch 1, **dadurch gekennzeichnet, dass** die gewindeähnliche Aussenkontur (63) des Hüllrohres (62) mit einem zweiten Basisteil (14; 51) verbindbar ist, das einen, eine Durchführöffnung (15) umgebenden Aufnahmeraum (16) für ein Abschottmittel (17; 52) und im Bereich der Durchführöffnung (15) eine, der gewindeähnlichen Aussenkontur (63) entsprechende gewindeähnliche Innenkontur (18) aufweist.

5. Eingiessteil nach einem der Ansprüche 1 bis 3, **dadurch gekennzeichnet, dass** die gewindeähnliche Aussenkontur (44, 45) des Hüllrohres (42, 43) mit einem hülsenförmigen Kupplungsteil (46) verbindbar ist.

6. Eingiessteil nach Anspruch 5, **dadurch gekennzeichnet, dass** die gewindeähnliche Aussenkontur (44, 45) des Hüllrohres (42, 43) mit einer, der gewindeähnlichen Aussenkontur (44, 45) entsprechenden gewindeähnlichen Innenkontur (47) des hülsenförmigen Kupplungsteils (46) verbindbar ist.

## Claims

1. Cast-in element for forming a leadthrough for conduits with a jacket tube (12; 42, 43; 62) and a base part (14; 51) which can be connected with the jacket tube (12; 42, 43; 62) and having a space (16) surrounding a through-opening (15) for receiving partitioning means (17; 52), **characterised in that** the jacket tube (12; 42, 43; 62) has a thread-like outer profile (13; 44, 45; 63), and the base part (14; 51) has, in the region of the through-opening (15), a thread-like inner profile (18) corresponding to the thread-like outer profile (13; 44, 45; 63).

2. Cast-in element according to claim 1, **characterised in that** the thread-like outer profile (13; 45) of the jacket tube (12; 43) can be connected with a cover part (21).

3. Cast-in element according to claim 2, **characterised in that** the thread-like outer profile (13; 45) of the jacket tube (12; 43) can be connected with projections (22) formed on the cover part (21).

4. Cast-in element according to claim 1, **characterised in that** the thread-like outer profile (63) of the jacket tube (62) can be connected with a second base part (14; 51) which has a space (16) surrounding a through-opening (15) for receiving partitioning means (17; 52) and, in the region of the through-opening (15), a thread-like inner profile (18) corresponding to the thread-like outer profile (63).

5. Cast-in element according to one of the claims 1 to 3, **characterised in that** the thread-like outer profile (44, 45) of the jacket tube (42, 43) can be connected with a sleeve-formed coupling part (46).

6. Cast-in element according to claim 5, **characterised in that** the thread-like outer profile (44, 45) of the jacket tube (42, 43) can be connected with a thread-like inner profile (47) of the sleeve-formed coupling part (46) corresponding to the thread-like outer profile (44, 45).

## Revendications

1. Pièce à sceller pour former une traversée de conduites, comportant un tube de gainage (12 ; 42, 43 ; 62) et une partie de base (14 ; 51) pouvant être assemblée avec le tube de gainage (12 ; 42, 43 ; 62), laquelle partie de base comporte un espace (16) entourant une ouverture traversante (15) pour recevoir des moyens d'étanchéité (17 ; 52), **caractérisée en ce que** le tube de gainage (12 ; 42, 43 ; 62) présente un contour extérieur analogue à un filetage (13 ; 44, 45 ; 63) et la partie de base (14 ; 51) présente, dans la zone de l'ouverture traversante (15), un contour intérieur analogue à un filetage (18) correspondant au contour extérieur analogue à un filetage (13 ; 44, 45 ; 63).

2. Pièce à sceller selon la revendication 1, **caractérisée en ce que** le contour extérieur analogue à un filetage (13 ; 45) du tube de gainage (12 ; 43) peut être assemblé avec une pièce de couvercle (21).

3. Pièce à sceller selon la revendication 2, **caractérisée en ce que** le contour extérieur analogue à filetage (13 ; 45) du tube de gainage (12 ; 43) peut être assemblé avec des saillies (22) formées sur la partie de couvercle (21).

4. Pièce à sceller selon la revendication 1, **caractérisée en ce que** le contour extérieur analogue à un filetage (63) du tube de gainage (62) peut être assemblé avec une seconde pièce de base (14 ; 51) comportant un espace (16) entourant l'ouverture traversante (15) pour recevoir des moyens d'étanchéité (17 ; 52) et présentant, dans la zone de l'ouverture traversante (15), un contour intérieur analogue à un filetage (18) correspondant au contour extérieur analogue à un filetage (63).

5. Pièce à sceller selon l'une quelconque des revendications 1 à 3, **caractérisée en ce que** le contour extérieur analogue à un filetage (44, 45) du tube de gainage (42, 43) peut être assemblé avec une pièce de liaison en forme de douille (46).

6. Pièce à sceller selon la revendication 5, **caractérisée en ce que** le contour extérieur analogue à un filetage (44, 45) du tube de gainage (42, 43) peut être assemblé avec un contour intérieur analogue à un filetage (47) de la partie de liaison en forme de douille (46), correspondant au contour extérieur analogue à un filetage (44, 45).
